# EUROPÄISCHE PATENTSCHRIFT

(11) **EP 3 083 338 B1**
(45) Veröffentlichungstag und Bekanntmachung des Hinweises auf die Patenterteilung: **06.12.2017**
(21) Anmeldenummer: 14828002.7
(22) Anmeldetag: 18.12.2014
(51) Int. Cl.: B60R 22/48

(54) **SCHALTER FÜR EIN GURTSCHLOSS IN STAUB- UND/ODER WASSERGESCHÜTZTER AUSFÜHRUNG**
SWITCH FOR A SEAT BELT BUCKLE IN AN EMBODIMENT PROTECTED FROM DUST AND/OR WATER
COMMUTATEUR POUR VERROU DE CEINTURE DANS UNE CONCEPTION IMPERMÉABLE À LA POUSSIÈRE ET/OU À L'EAU

(30) Priorität: 21.12.2013 DE 202013011529 U
(43) Veröffentlichungstag der Anmeldung: 26.10.2016
(73) Patentinhaber: Eao Automative GmbH & Co. KG, 08209 Auerbach (DE)
(72) Erfinder: EBERT, Bernd, 08228 Rodewisch (DE)
(74) Vertreter: Helge, Reiner
(86) Internationale Anmeldenummer: PCT/DE2014/000638
(87) Internationale Veröffentlichungsnummer: WO 2015/090268

(56) Entgegenhaltungen:
- WO-A1-2013/127377
- DE-A1- 4 338 485
- DE-U1- 20 204 318
- US-A- 4 163 128
- US-A- 5 590 904
- US-A- 6 002 325

## Beschreibung

Die vorliegende Erfindung betrifft einen Schalter in staub- und/oder wassergeschützter Ausführung , der in einem Gurtschloß von Rückhaltesystemen in Kraftfahrzeugen zur Anwendung kommt und die funktionsgemäße Verriegelung der in das Gurtschloß eingesteckten Zunge des Sicherheitsgurtes anzeigt.

Bekannt ist aus der DE 43 38 485 A1 ein für die fail-safe-Abfrage eingerichteter Sicherheitsgurtverschluß mit Mikroschalter, wobei der Mikroschalter mit zwei am Verriegelungsvorgang des Verschlusses unabhängig voneinander beteiligten Funktionsteilen derart gekoppelt ist, daß der Mikroschalter nur bei den beiden gleichzeitig in der Verriegelungsposition stehenden Funktionsstellen des Verschlusses seine geschlossene und für die Auslösung weiterer Funktionselemente der Sicherheitseinrichtung eingerichtete Stellung einnimmt.

Bekannt ist aus dem DE 202 04 318 U1 ein Schalter für ein Gurtschloß von Rückhaltesystemen von Kraftfahrzeugen zur Anzeige, daß die Gurtzunge in das Gurtschloß eingesteckt und ordnungsgemäß verriegelt ist, mit zwei Kontaktblechen, wobei ein Kontaktblech nach seinem kontaktgebenden Ende hin als Doppelkontaktzunge ausgebildet ist und diese innerhalb des Gurtschlosses angeordnet sind, wobei die kontaktgebenden Bereiche der Kontaktbleche in einem vor Fremdstoffen geschützten oberen Gehäuseinnenraum des Schaltergehäuses vorgesehen sind, das Schaltergehäuse innerhalb des Gurtschlosses angeordnet ist und ein Kontaktblech als Kontaktfeder mit einem hammerförmigen Bereich am kontaktgebenden Ende und einem mittleren bogenförmigen bereich ausgebildet ist und der bogenförmige Bereich der Kontaktfeder in einen seitlich vom Gehäuseinnenraum angeordneten Kanal hineinragt und der Kontakt durch Bewegen eines Schiebers im Kanal schaltbar ist.

Durch die bogenförmige Gestaltung im mittleren Bereich des Kontaktteiles ist die Kontaktkraft an der Kontaktstelle entsprechend der Hebelverhältnisse zur Einspannstelle gering und die Gefahr gegeben, daß bei vollständiger Betätigung des Schiebers (infolge seiner geringen Höhe) ein unerwünschtes Zurückschalten (Schließen) des Kontaktes erfolgt (Overtravel-Effekt).

Weiterhin ist aus der US 6,002,325 eine Signaleinheit für den Anschnallzustand von Sicherheitsgurten bekannt. Sie bestehet aus einer Leiterplatte, die mit elektronischen Bauelementen und federnden Kontaktblechen für einen Schalter bestückt ist. Die Leiterplatte ist in einem Gehäuse montiert, das auf der Außenfläche des Gurtschlosses befestigt ist. Im Gehäuse ist ein Schwenkhebel auf einem Zapfen gelagert, der beim Einstecken der Gurtzunge in das Gurtschloß mittels Abgleiten einer Kante der Gurtzunge auf einer Gleitfläche des Schwenkhebels entgegen der Wirkung einer Drehfeder in den Kontaktraum der Signaleinheit gedreht wird und die Kontakte schaltet.

Da die Einsteck-Längsbewegung der Gurtzunge nicht direkt für das Schalten der Kontakte genutzt werden kann, sondern über den Schwenkhebel in eine in etwa hierzu senkrechte Richtung umgewandelt werden muß, ergibt sich die Gefahr einer starken Abnutzung der Gleitfläche am Schwenkhebel durch möglichen Grat an der Gleitkante der Gurtzunge im Verlauf der Lebensdauer, was die Schaltfunktion beeinträchtigen kann.

Aus der japanischen Gebrauchsmusteranmeldung Sho-61-200834 ist ein Gurtschloß mit einer Signaleinheit für den Anschnallzustand von Sicherheitsgurten bekannt. Das Gurtschloß besteht aus zwei Gehäusehälften und einer Platine. Innerhalb des Gurtschloß-Gehäuses ist ein Kontakt als bogenförmiger Bereich des Leiters ausgebildet. Des Weiteren befindet sich ein Kontakt (Kontaktfeder) im Raum zwischen dem Gehäuseteil und der Platine, der an seinem unteren Ende bogenförmig ausgebildet ist.

Durch Einschieben der Gurtzunge in die Öffnung des Gurtschlosses drückt diese auf den Schieber, wobei die Schraubenfeder gespannt wird. Gleichzeitig wird der bogenförmige Endbereich durch die Öffnung in Richtung des bogenförmigen Bereichs des Leiters gedrückt und stellt so den Kontakt her.

Die Schaltelemente sind zwar innerhalb des Gurtschloß-Gehäuses angeordnet, aber nicht in einem separaten Schaltergehäuse. Eindringende Schmutzteilchen bzw. Flüssigkeiten (über die Öffnung des Gurtschlosses) können direkt die Kontaktelemente erreichen und so zu Funktionsausfällen führen.

Die US 4,163,128 beschreibt ein Sicherheits-Gurtschloß mit einem Schalter, der aus zwei federnden Kontaktblechen besteht, deren Enden sich bei nicht eingesteckter Gurtzunge berühren. Das Schalten erfolgt durch zwei Kurvenbahnen, die sich an einem auf einem Zapfen des Gurtschloßgehäuses gelagerten Drehbetätiger befinden. Der Drehbetätiger wird durch die Gurtzunge bei deren Einstecken in das Gurtschloß entgegen der Wirkung einer Drehfeder so gedreht, daß die Kurvenbahnen die Enden der Kontaktbleche nacheinander auslenken und dadurch den Kontakt öffnen.

Die Drehung erfolgt über einen am Drehbetätiger senkrecht hoch stehenden Zapfen, der mit der Gurtzunge in Eingriff kommt. Das Rückschalten erfolgt durch selbsttätige Rückstellung des Drehbetätigers infolge der Wirkung der Drehfeder und Rückfederung der Kontaktbleche nach Ziehen der Gurtzunge.

Die Kontaktbleche sind in das Gurtschloß integriert, aber nicht in einem eigenständigen Schaltergehäuse.

Für das Schalten der Kontakte kann auch hier die Einsteck-Längsbewegung der Gurtzunge nicht direkt genutzt werden. Es ist ein zusätzliches Umlenkteil in Form eines Drehbetätigers mit einer Drehfeder erforderlich.

Die US 5,590,904 A beschreibt ein Gurtschloß mit einem Schaltelement zur Erkennung der ordnungsgemäßen Verriegelung der Gurtzunge im Gurtschloß. Das Schaltelement besteht aus einem offenen Rahmen, auf dem die Schaltkontakte angeordnet sind. Die Kontaktelemente sind im oberen Bereich leicht bogenförmig ausgebildet und liegen einander an. Beim Einschieben der Gurtzunge wird der Stößel nach unten gedrückt und die Schaltkontakte mittels der Nase auseinandergedrückt.

Die Schaltkontakte liegen offen im Inneren des Gurtschloßgehäuses bzw. Flüssigkeiten können die Schaltkontakte direkt erreichen, wodurch Funktionsausfälle hervorgerufen werden können.

Bekannt ist aus EP 1 485 276 B1 ein Schalter für ein Gurtschloß mit zwei Kontaktblechen, wobei ein erstes Kontaktblech nach seinem kontaktgebenden Ende hin als Doppelkontaktzunge und ein zweites Kontaktblech als Kontaktfeder mit einem hammerförmigen Bereich am kontaktgebenden Ende ausgebildet ist. Die kontaktgebenden Bereiche beider Kontaktbleche liegen in einem weitgehend vor Fremdstoffen geschützten oberen Gehäuseinnenraum des Schaltergehäuses. Unterhalb dieses Raumes enthält die Kontaktfeder einen bogenförmigen Bereich, der durch eine entsprechende Öffnung im Schaltergehäuse in einen seitlich vom Gehäuseinnenraum angeordneten Kanal, der Teil des Schalters ist, hinein ragt. In diesen Kanal wird beim Einstecken der Gurtzunge in das Gurtschloß ein zum Gurtschloß gehöriger Schieber hinein bewegt und trifft auf den in den Kanal ragenden bogenförmigen Bereich der Kontaktfeder. Dabei wird die Kontaktfeder entgegen ihrer Spannkraft in Richtung Gehäuseinnenraum ausgelenkt und der elektrische Schaltvorgang am kontaktgebenden Ende der Kontaktfeder zusammen mit der Doppelkontaktzunge des ersten Kontaktbleches bewirkt. Der Schalter kann als Öffner oder Schließer ausgeführt sein.

Infolge der für die Herausführung des bogenförmigen Bereiches der Kontaktfeder aus dem Gehäuseinnenraum erforderlichen Öffnung im Schaltergehäuse ist ein Staubschutz für den Gehäuseinnenraum und damit für die darin befindlichen kontaktgebenden Bereiche der beiden Kontaktbleche nicht zu erreichen.

Des Weiteren kann auf Grund der erforderlichen Richtungsumleitung der durch den Schieber auf den bogenförmigen Bereich der Kontaktfeder wirkenden Längskraft in eine für die Auslenkung der Kontaktfeder erforderliche Querkraft eine Deformierung des bogenförmigen Bereiches der Kontaktfeder durch Reibungskräfte beim Auftreffen des Schiebers auf diesen Bereich bei gleichzeitigem Vorliegen von toleranzbedingten Maximalwerten für die Dicke des Schiebers und das Maß für das Hineinragen des bogenförmigen Bereiches der Kontaktfeder in den seitlich vom Gehäuseinnenraum angeordneten Kanal nicht ausgeschlossen werden, wenn zusätzlich die Reibwirkung durch von außen in das Gurtschloß eingedrungene Fremdkörper erhöht wird. Als Folge davon kann im Extremfall die Schalterfunktion gestört sein.

Aus der WO 2013/127 377 A1 ist ein staub- und wassergeschützter Schalter, insbesondere für ein Gurtschloß von Rückhaltesystemen von Kraftfahrzeugen zur Anzeige, ob die Gurtzunge in das Gurtschloß eingesteckt und ordnungsgemäß verriegelt ist, bekannt, der dem Oberbegriff des Anspruchs 1 entspricht. Der Schalter weist einen vor Fremdstoffen geschützten Gehäuseinnenraum auf, in dem die Kontaktbleche, bestehend aus einem Festkontaktblech und einem Kontaktfederblech, angeordnet sind und mittels eines aus einem rechtwinkligen Blechstreifen gebildeten Betätigungsbügels schaltbar sind, wobei der Betätigungsbügel mit seiner Abwinkelung die dem Kanal zugewandten Seite des Gehäuseinnenraumes durchdringt und mit seinem anderen Ende im Schaltergehäuse schwenkbar gelagert ist. Die Abwinkelung am unteren Ende weist einen halbkreisförmigen Endbereich auf, der in einer Aussparung im Schaltergehäuse schwenkbar gelagert ist.

Ausgehend vom dargelegten Stand der Technik bei Gurtschloßsystemen der eingangs genannten Art liegt der vorliegenden Erfindung die Aufgabe zugrunde, einen in seinem Aufbau einfachen Schalter in das Gurtschloß zu integrieren, mit dem zuverlässig der Zustand, ob ein Gurtschloß eines Sicherheitsgurtes eines Fahrzeugs geschlossen oder geöffnet ist, erkannt werden kann und das kostengünstig herstellbar ist, wobei die Schaltkontakte in einem weitgehend vor eindringendem Schmutz geschützten Raum innerhalb des Schaltergehäuses angeordnet sind.

Erfindungsgemäß wird die Aufgabe dadurch gelöst, daß der Schalter in staubund/oder wassergeschützter Ausführung für ein Gurtschloß von Rückhaltesystemen von Kraftfahrzeugen zur Anzeige, daß die Gurtzunge in das Gurtschloß eingesteckt und ordnungsgemäß verriegelt ist, außerhalb des Gehäuseinnenraumes ein drehbar gelagertes Betätigungselement aufweist, wobei das Betätigungselement bogenförmig ausgebildet ist und an seiner der Lagerung gegenüberliegenden Seite mit einem Gleitbereich und zwischen der Lagerung und dem Gleitbereich mit einem die untere Gehäuseseite durchdringenden domförmigen Bereich versehen ist. Der domförmige Bereich wirkt mit seinem bogenförmigen Abschnitt beim Auslenken des Betätigungselementes auf die Kontaktfeder und schließt damit den Kontakt. Die Kontaktfeder lenkt das Betätigungselement derart aus, daß der Anschlagbund auf der Innenseite der unteren Gehäuseseite anliegt. Gegen Herausrutschen und zur Begrenzung der Schwenkbewegung ist am domförmigen Bereich ein Anschlagbund angeordnet.

Falls die elastische Kraft der Kontaktfeder auf den domförmigen Bereich des Betätigungselementes bei dynamischen Belastungen (Schwingungen, Stoß) nicht ausreicht, den Schalter dauernd in der unbetätigten Stellung zu halten, kann zusätzlich eine Feder vorgesehen werden. Die Feder lenkt das Betätigungselement derart aus, daß der Anschlagbund auf der Innenseite der unteren Gehäuseseite anliegt. Dazu ist auf der dem Gleitbereich gegenüberliegenden Seite des Betätigungselementes eine Federaufnahme und auf diesem eine Feder, die sich gegenüber der unteren Gehäuseseite abstützt, vorgesehen ist.

Der Schalter kann sowohl als Schließer mit Widerstandskodierung als auch als Schließer ohne Widerstandskodierung ausgebildet sein. Auch eine Ausführung als Öffner ist möglich.

Aufgrund einer möglichen engen Passung zwischen der Durchführung des domförmigen Bereiches durch die untere Gehäuseseite und dem domförmigen Bereich wird nach Montage des Gehäusedeckels einer hoher Schutz vor Eindringen von Staub und Flüssigkeiten in den Gehäuseinnenraum erreicht.

Anhand von Ausführungsbeispielen soll die Erfindung näher erläutert werden. Es zeigen
Figur 1- Schalter
Figur 2 - Schnitt durch den Schalter im betätigten Zustand
Figur 3 - Schnitt durch eine weitere Ausführung des Schalters
Figur 4 - Betätigungselement

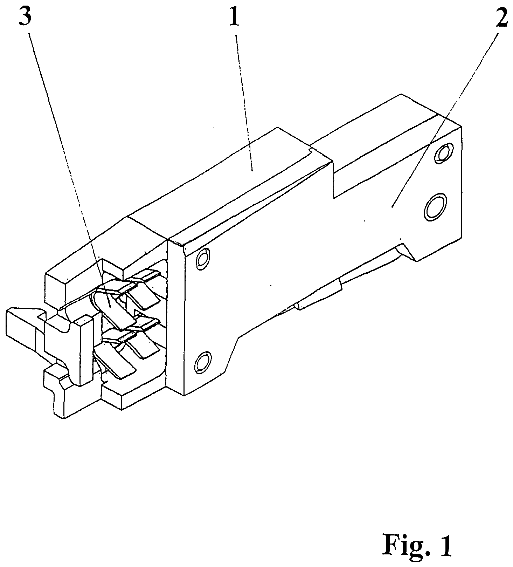

Die Figur 1 zeigt den erfindungsgemäßen Schalter zum Einbau in ein Gehäuse eines Gurtschlosses. Dieser besteht aus dem Schaltergehäuse **1** mit darin angeordneten Kontaktelementen (Festkontakt **10** und Kontaktfeder **11**), dem Betätigungselement **4,** einer Leiterplatte **12** und einem das Schaltergehäuse **1** verschließenden Gehäusedeckel **2.** Der Anschlußbereich **3** dient dem Leitungsanschluß des Schalters.

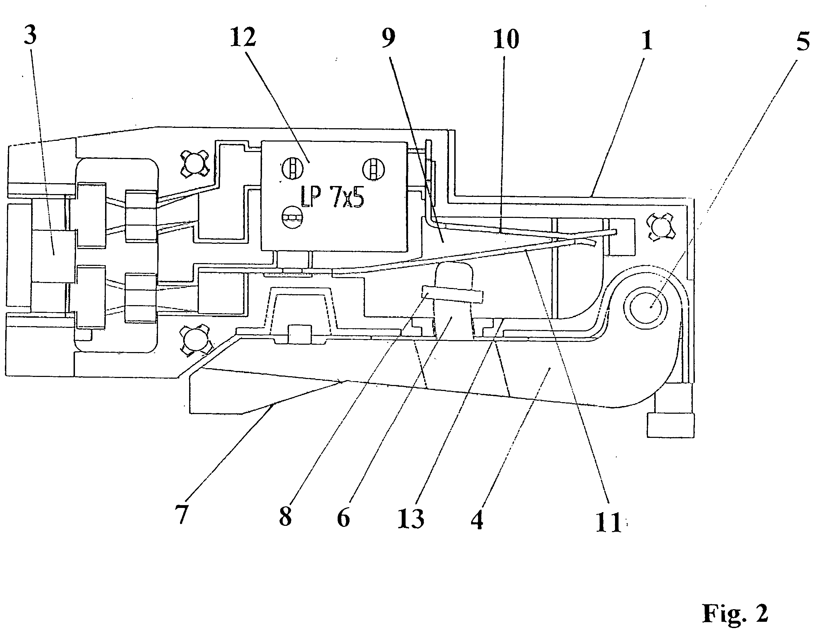

Die Figur 2 zeigt einen Schnitt durch den erfindungsgemäßen Schalter im betätigten Zustand. Der Schalter, der als Schließer ausgelegt ist, besteht aus dem Schaltergehäuse **1**, das mittels eines Gehäusedeckels **2** verschlossen wird.

Der Schalter weist einen geschlossenen Gehäuseinnenraum **9** auf, der den Festkontakt **10** und die Kontaktfeder **11** sowie die Leiterplatte **14** aufnimmt. Am Schaltergehäuse **1** ist ein Anschlußbereich **3** vorgesehen, der mit dem Festkontakt **10** und der Kontaktfeder **11** verbunden ist. Diese können hier mit den Anschlußleitungen verbunden werden.

Das Betätigungselement **4** ist einerseits mittels einer Lagerung **5** im Schaltergehäuse **1** schwenkbar gelagert. Andererseits durchdringt der domförmige Bereich **6** die untere Gehäuseseite **13** und liegt mit seinem bogenförmigen Abschnitt an der Kontaktfeder **11** an. Der Anschlagbund **8** am domförmigen Bereich **6** verhindert ein Herausrutschen des domförmigen Bereichs **6** im unbetätigten Zustand. Gleichzeitig wird die Auslenkung des Betätigungselementes **4** begrenzt.

Beim Einstecken der Gurtzunge in das Gurtschloß gleitet eine Fläche des im Gurtschloß vorhandenen Schiebers zunächst parallel an der Längsfläche **17** des Betätigungselements **4** entlang bis schließlich der Gleitbereich **7** erreicht wird. Dabei wird das Betätigungselement **4** in Richtung der unteren Gehäuseseite **13** geschwenkt und die Kontaktfeder **11** über den domförmigen Bereich **6** in Richtung des Festkontaktes **10** ausgelenkt, wodurch das Ende der Kontaktfeder **11** den Festkontakt **10** berührt und den Schaltvorgang auslöst. Die ordnungsgemäße Verriegelung der Gurtzunge im Gurtschloß wird dementsprechend angezeigt.

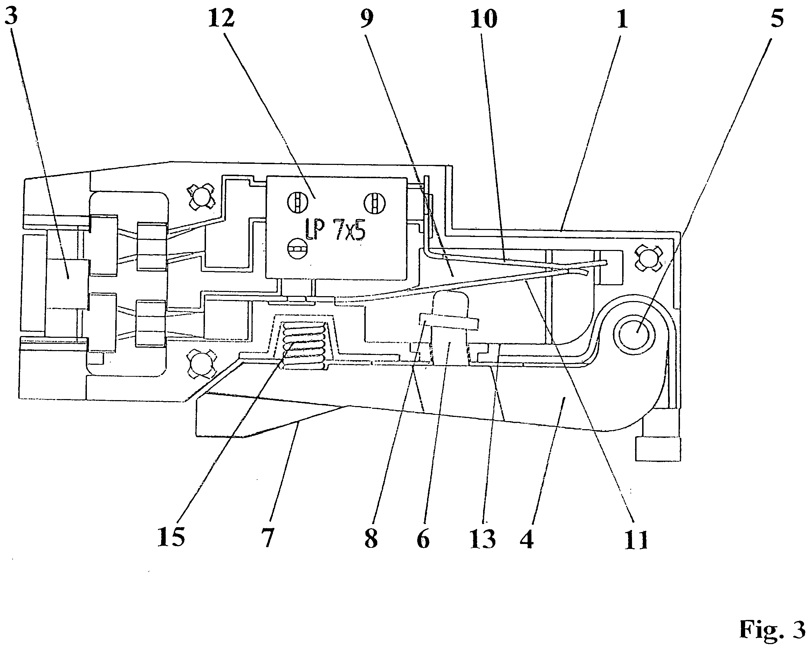

Die Figur 3 zeigt einen Schnitt durch eine weitere Ausführung des erfindungsgemäßen Schalters. Der Schalter weist im wesentlichen den gleichen Aufbau auf, wie im vorausgehenden Beispiel beschrieben.

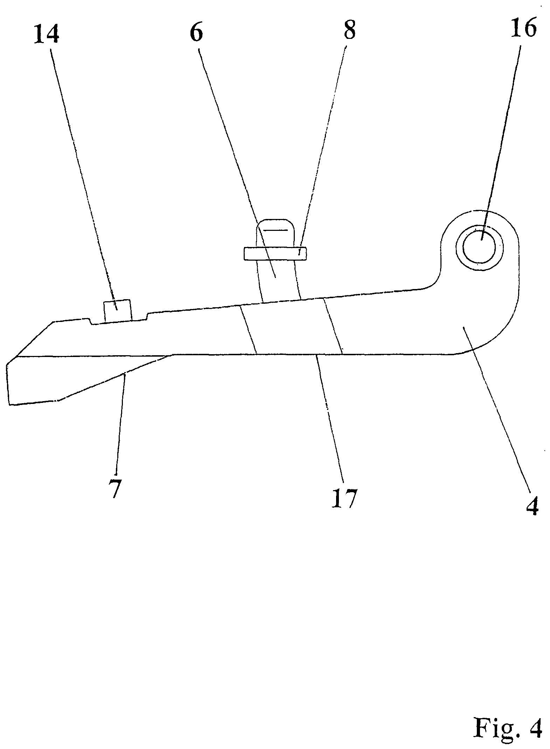

Das Betätigungselement **4** (Fig. 4) ist bogenförmig ausgebildet und weist auf der einen Seite ein Lagerauge **16** auf. Auf der gegenüberliegenden Seite ist der Gleitbereich **7** vorgesehen, der in Zusammenspiel mit dem im Gurtschloß vorhandenen Schieber beim Einstecken der Gurtzunge die Auslenkung des Betätigungselements **4** und damit die Kontaktierung von Festkontakt **10** und Federkontakt **11** bewirkt.

Auf der dem Gleitbereich **7** gegenüberliegenden Seite ist eine Federaufnahme **14** zur Aufnahme der Feder **15** vorgesehen. Die Feder **15,** die sich gegenüber der unteren Gehäuseseite **13** abstützt, drückt das Betätigungselement **4** in Richtung der Gleitfläche des Schiebers, wobei der Anschlagbund **8** an der Innenseite der unteren Gehäuseseite **13** anliegt.

Damit wird zum einen die Auslenkbewegung des Betätigungselementes **4** in unbetätigten Zustand begrenzt. Zum anderen bewirkt die Feder **15** bei dynamischen Belastungen (Schwingungen, Stoß) das dauerhafte Halten des Schalters im unbetätigten Zustand, ohne daß es zu Fehlinterpretationen über den Schaltzustand kommt.

Der so ausgebildete Schalter kann vollautomatisch montiert werden. Mittels entsprechender Bestückungsautomaten können Festkontakt **10,** Kontaktfeder **11** und das Betätigungselement **4** eingesetzt werden.

Nach dem Verschließen des Schaltergehäuses **1** mittels des Gehäusedeckels **2** kann der Schalter auf seine Funktion geprüft werden. Anschließend können dann die Anschlußleitungen angebracht werden. Dies erfolgt weitgehend automatisiert durch Crimpen oder Verschweißen, da das Gehäuse **1** im Anschlußbereich **3** offen ist.

Der Gehäuseinnenraum **9** ist bis auf den Spalt, der den domförmigen Bereich **6** des Betätigungselements **4** umgibt, geschlossen ausgebildet, so daß das Eindringen von Fremdkörpern, wie Staub und Wasser in den Kontaktbereich weitestgehend verhindert wird. Somit ist ein Schutz vor Funktionsausfällen durch Verschmutzung gewährleistet.

### Bezugszeichenaufstellung

1 Schaltergehäuse
2 Gehäusedeckel
3 Anschlußbereich
4 Betätigungselement
5 Lagerung
6 domförmiger Bereich
7 Gleitbereich
8 Anschlagbund
9 Gehäuseinnenraum
10 Festkontakt
11 Kontaktfeder
12 Leiterplatte
13 Gehäuseseite
14 Federaufnahme
15 Feder
16 Lagerauge
17 Längsfläche

## Patentansprüche

1. Schalter für ein Gurtschloß in staub- und/oder wassergeschützter Ausführung von Rückhaltesystemen von Kraftfahrzeugen zur Anzeige, daß die Gurtzunge in das Gurtschloß eingesteckt und ordnungsgemäß verriegelt ist, mit einem Festkontakt und einer Kontaktfeder, wobei diese und die kontaktgebenden Bereiche in einem vor Fremdstoffen geschützten Gehäuseinnenraum des Schaltergehäuses angeordnet sind und der Kontakt beim Einstecken der Gurtzunge schaltbar ist, wobei im Schaltergehäuse (1) außerhalb des Gehäuseinnenraumes (9) ein drehbar gelagertes Betätigungselement (4) angeordnet ist, wobei das Betätigungselement (4) bogenförmig ausgebildet ist und an seiner der Lagerung (5) gegenüberliegenden Seite mit einem Gleitbereich (7) versehen ist, **dadurch gekennzeichnet, dass** das Betätigungselement (4) zwischen der Lagerung (5) und dem Gleitbereich (7) mit einem die untere Gehäuseseite (13) durchdringenden domförmigen Bereich (6) versehen ist.

2. Schalter für ein Gurtschloß nach Anspruch 1,
**dadurch gekennzeichnet, daß**
der domförmige Bereich (6) einen Anschlagbund (8) gegen Herausrutschen und zur Begrenzung der Schwenkbewegung aufweist.

3. Schalter für ein Gurtschloß nach Anspruch 1 und 2,
**dadurch gekennzeichnet, daß**
auf der dem Gleitbereich (7) gegenüberliegenden Seite des Betätigungselementes (4) eine Federaufnahme (14) und auf diesem eine Feder (15), die sich gegenüber der unteren Gehäuseseite (13) abstützt, vorgesehen ist.

4. Schalter für ein Gurtschloß nach Anspruch 1 bis 3,
**dadurch gekennzeichnet, daß**
der Schalter als Schließer mit Widerstandskodierung ausgebildet ist.

## Claims

1. Switch for a seatbelt buckle with dustproof and/or water-protected design for restraint systems of motor vehicles. This switch indicates that the belt tongue is inserted into the seatbelt buckle and that it is properly locked, and is provided with a fixed contact and a contact spring. These parts, as well as the contact surfaces, are installed in an interior compartment of the switch housing so that they are protected against foreign matter. In addition, the contact is switchable when the belt tongue is inserted.
In the switch housing (1), outside of the interior compartment (9), a pivotally mounted actuating element (4) is installed. This actuating element (4) has an arch-shaped design. On its side, opposite the bearing (5), it is provided with a sliding-contact area (7). This switch is
**characterized by the fact that**
the actuating element (4) between the bearing (5) and the sliding-contact area (7) is provided with a dome-shaped area (6) penetrating the lower housing side (13).

2. Switch for a seatbelt buckle according to claim 1,
**characterized by the fact that**
the dome-shaped area (6) has a stop collar (8) against slipping out of position and for limiting the swivel movement.

3. Switch for a seatbelt buckle according to claims 1 and 2,
**characterized by the fact that**
a spring support (14) is provided on the side of the actuating element (4) opposite the sliding-contact area (7). On this actuating element, a spring (15) is installed which is supported on the opposite shoulder of the lower housing side (13).

4. Switch for a seatbelt buckle according to claims 1 to 3,
**characterized by the fact that**
the switch is designed as a normally-open contact with resistance coding.

## Revendications

1. Commutateur qui est destiné à un verrou de ceinture dans une conception imperméable à la poussière et/ou à l'eau de systèmes de retenue de véhicules automobiles pour indiquer que la languette de ceinture est insérée dans le verrou et est correctement verrouillée, et qui comprend un contact fixe et un ressort de contact, celui-ci et les zones de contact étant disposés dans un logement, protégés contre les matières étrangères, du boîtier de commutateur et le contact pouvant être commuté lors de l'insertion de la languette de ceinture,
un élément d'actionnement (4) monté à rotation étant disposé dans le boîtier de commutateur (1) à l'extérieur du logement (9) du boîtier, l'élément d'actionnement (4) ayant une configuration incurvée et étant équipé, sur son côté opposé au palier (5), d'une zone de coulissement (7),
**caractérisé en ce que**
l'élément d'actionnement (4) est équipé d'une zone (6) en forme de dôme, pénétrant dans le côté inférieur (13) du boîtier, entre le palier (5) et la zone de coulissement (7).

2. Commutateur destiné à un verrou de ceinture selon la revendication 1,
**caractérisé en ce que**
la zone (6) en forme de dôme présente une collerette de butée (8) afin d'éviter tout glissement et de limiter tout mouvement de rotation.

3. Commutateur destiné à un verrou de ceinture selon les revendications 1 et 2,
**caractérisé en ce que**
un logement à ressort (14) est prévu sur le côté de l'élément d'actionnement (4) opposé à la zone de coulissement (7), laquelle est équipée d'un ressort (15), qui s'appuie face au côté inférieur (13) du boîtier.

4. Commutateur destiné à un verrou de ceinture selon les revendications 1 à 3,
**caractérisé en ce que**
le commutateur est formé en tant que contact à fermeture avec codage de la résistance.
